# EUROPEAN PATENT APPLICATION

(11) **EP 4 397 171 A1**
(43) Date of publication of application: **10.07.2024**
(21) Application number: 22865005.7
(22) Date of filing: 30.08.2022
(51) Int. Cl.: A01G 9/02, A01G 7/04, F21V 15/01, F21V 5/04, F21Y 105/16, F21Y 115/10

(54) **PLANT CULTIVATION DEVICE**

(30) Priority: 30.08.2021 KR 20210115140
(71) Applicant: LG Electronics Inc., Yeongdeungpo-gu Seoul 07336 (KR)
(72) Inventor: LEE, Soobeom, Seoul 08592 (KR); OH, Jong Min, Seoul 08592 (KR); KOO, Jonghyun, Seoul 08592 (KR)
(74) Representative: Vossius & Partner Patentanwälte Rechtsanwälte mbB
(86) International application number: PCT/KR2022/012933
(87) International publication number: WO 2023/033503

(57) **Abstract**

The present disclosure relates to a plant cultivator, and more specifically, to an open plant cultivator that, by disposing a light source part having a plurality of light source elements on the horizontal extension part of the handle, can generate a sufficient amount of light to grow a plurality of plants, and can evenly transmit the light generated to a cultivation port part.

## Description

### [Technical Field]

The present disclosure relates to a plant cultivator, and more specifically, to an open plant cultivator that, by disposing a light source part having a plurality of light source elements on the horizontal extension part of the handle, can generate a sufficient amount of light to grow a plurality of plants, and can evenly transmit the light generated to a cultivation port part.

### [Background Art]

Recently, consumer interest in and demand for eco-friendly crops have been rapidly increasing.

In order to meet the interest and demand of such users, technologies and products related to home plant cultivators that can easily directly cultivate plants such as vegetables at home are being developed.

In general, the way to grow plants at home is to fill a container such as an open-top pot with culture soil, plant various seeds or plants in the culture soil, and supply moisture at regular intervals to provide the environment necessary for cultivating the plant (lighting, ventilation, and the like).

However, not only is it very cumbersome to create an environment for cultivating plants using the culture soil at home, but it is also not easy to obtain suitable culture soil.

As an alternative to the traditional cultivation method using such culture soil, the proportion of plant cultivators applying the hydroponic cultivation method using culture water mixed with water and culture medium in a certain ratio suitable for home use is gradually increasing.

In general, the home plant cultivators using the hydroponic cultivation method can be divided into a closed type, in which the cultivation environment in which plants are cultivated is formed as a closed room inside the cultivation room, and an open type, in which the cultivation environment is exposed to indoors as it is.

Regarding an open plant cultivator, in Japanese Patent Laid-Open No. 2014-000023 (Prior Document 001), the configuration of an open plant cultivator is disclosed which includes a hydroponic cultivation unit, a base part supporting the hydroponic cultivation unit, and a lighting part that emits light to the hydroponic cultivation unit.

Here, the hydroponic cultivation unit is equipped with a medium suitable for hydroponic cultivation of plants and corresponds to a configuration referred to as a cultivation pod or a cultivation pot in the related technical field.

However, in the plant cultivator disclosed in prior document 001, the lighting part that generates light necessary for plant growth is composed of a small number of light-emitting elements.

Therefore, there is a problem that it is not suitable for cultivating a large amount of plants due to very insufficient light.

In addition, in the lighting part of the plant cultivator of prior document 001, the light emitting element is not pointed directly at the plant or is configured to point at a specific portion of the plant.

Therefore, a significant portion of the light that should be transmitted to the plant is simply emitted to the outside, and the light transmitted to the plant has no choice but to be concentrated in a specific part, which causes a problem in that the efficiency of the light emitting element is significantly lowered.

### [Disclosure]

### [Technical Problem]

The present disclosure was conceived to solve the problems of the prior art described above, and an first object of the present disclosure is to provide a plant cultivator that, by disposing a light source part having a plurality of light source elements on the horizontal extension part of the handle, can generate a sufficient amount of light to grow a plurality of plants, and can evenly transmit the light generated to a cultivation port part.

In addition, a second object of the present disclosure is to provide a plant cultivator that, by adjusting the disposition spacing of the plurality of light emitting elements, can emit the light generated from the light emitting elements evenly toward the plants without being biased.

In addition, a third object of the present disclosure is to provide a plant cultivator that, by being clearly directing the light generated from the light emitting element through the light condensing means toward the cultivation port part, can improve the light emitting efficiency of the light source element and reduce the amount of power consumed.

The objects of the present disclosure are not limited to the objects mentioned above, and other objects and advantages of the present disclosure that are not mentioned can be understood by the following description and will be more clearly understood by the embodiments of the present disclosure. Additionally, it will be readily apparent that the objects and advantages of the present disclosure can be realized by the means and combinations thereof indicated in the patent claims.

### [Technical Solution]

A plant cultivator according to the present disclosure includes a cultivation port part; a main body part on which the cultivation port part is detachably disposed; a light source part configured to emit light toward the cultivation port part; and a housing disposed above the main body part and configured to accommodate the light source part; in which the housing is disposed to be spaced apart from an upper surface of the cultivation port part and includes a horizontal extension part extending across the upper surface of the cultivation port part, and the light source part is disposed inside the horizontal extension part.

In addition, the light source part may include a circuit board disposed parallel to the upper surface of the cultivation port part and having a length in a left and right direction larger than a width in a front and rear direction; and a plurality of light source elements configured to generate light emitted toward the cultivation port part and disposed on the circuit board.

In addition, when the circuit board is moved in parallel in a downward direction toward the cultivation port part, the plurality of light source elements may be located inside the upper surface of the cultivation port part.

In addition, the plurality of light source elements may include a plurality of first light source elements arranged on a first extension line extending along a longitudinal direction of the circuit board; and a plurality of second light source elements arranged on a second extension line extending along the longitudinal direction of the circuit board and different from the first extension line.

In addition, the first extension line and the second extension line may be parallel to each other.

In addition, the spacing between the plurality of first light source elements in the left and right direction may be constant respectively, and the spacing between the plurality of second light source elements in the left and right direction may be constant respectively.

In addition, the spacing between the plurality of first light source elements in the left and right direction may be varied while advancing along the first extension line, and the spacing between the plurality of second light source elements in the left and right direction may be varied while advancing along the second extension line, respectively.

In addition, the spacing between the plurality of first light source elements in the left and right direction gradually may become smaller as they move away from the center of the horizontal extension part, and the spacing between the plurality of second light source elements in the left and right direction gradually may become smaller as they move away from the center of the horizontal extension part.

In addition, the horizontal extension part may include a plurality of light transmission holes that allow light generated from the plurality of light source elements to pass through and are open toward an upper surface of the cultivation port part.

In addition, each light source elements constituting the plurality of light source elements may be disposed in one-to-one correspondence with each light transmission holes constituting the plurality of light transmission holes, respectively.

In addition, the each light source elements may be partially inserted into the each light transmission holes, respectively, and the each light transmission holes may have an upper opening that opens in an upward direction and into which the each light source elements is partially inserted, and a lower opening that opens in a downward direction, and the area of the lower opening may be formed to be larger than the area of the upper opening.

In addition, the housing further may include a transparent cover coupled to the horizontal extension part, disposed on a lower side of the lower opening, and through which light generated by the plurality of light source elements passes; and the transparent cover may include a condensing lens part that is formed to be convex toward the lower opening.

In addition, the condensing lens part extends linearly in the left and right direction, and a width in the front and rear direction may be maintained constant while moving in the left and right direction, and the width of the condensing lens in the front and rear direction may be larger than a width of each light transmission holes in the front and rear direction.

In addition, the housing may include a first downward extension part having an upper end portion which is connected to a left end portion of the horizontal extension part and a lower end portion which is detachably connected to the main body part; and a second downward extension part having an upper end portion which is connected to a right end portion of the horizontal extension part and a lower end portion which is detachably connected to the main body part; in which the first downward extension part may be provided with a first ventilation hole that communicates an inside of the horizontal extension part with indoor air, and the second downward extension part may be provided with a second ventilation hole that communicates the inside of the horizontal extension part with the indoor air.

In addition, the first ventilation hole and the second ventilation hole may be disposed to be spaced apart from each other with the light source part interposed therebetween.

### [Advantageous Effect]

The plant cultivator according to the present disclosure has the effect of, by disposing a light source part having a plurality of light source elements on the horizontal extension part of the handle, be capable of generating a sufficient amount of light to grow a plurality of plants, and be capable of evenly transmitting the light generated to a cultivation port part.

In addition, the plant cultivator according to the present disclosure has the effect of, by adjusting the disposition spacing of the plurality of light emitting elements, being capable of emitting the light generated from the light emitting elements evenly toward the plants without being biased.

In addition, the plant cultivator according to the present disclosure has the effect of, by being clearly directing the light generated from the light emitting element through the light condensing means toward the cultivation port part, being capable of improving the light emitting efficiency of the light source element and reducing the amount of power consumed.

In addition to the above-described effects, specific effects of the present disclosure are described below while explaining specific details for carrying out the disclosure.

### [Description of Drawings]

FIG. 1 is a front perspective view of a plant cultivator according to a first embodiment of the present disclosure.
FIG. 2 is a rear perspective view of the plant cultivator illustrated in FIG. 1.
FIG. 3 is an exploded perspective view of FIG. 1.
FIG. 4 is an exploded perspective view of FIG. 2.
FIG. 5 is an exploded perspective view of the handle part illustrated in FIG. 1.
FIG. 6 is a partial enlarged view of the first handle body illustrated in FIG. 5 viewed from above.
FIG. 7 is a partial enlarged view of the first handle body illustrated in FIG. 5 viewed from the bottom.
FIG. 8 is a cross-sectional perspective view of the first handle body illustrated in FIG. 5 taken along line A-A.
FIG. 9 is a cross-sectional perspective view of the first handle body illustrated in FIG. 5 taken along the second extension line.
FIG. 10 is a cross-sectional perspective view of the handle part illustrated in FIG. 4 taken along lines parallel to the front and rear direction.

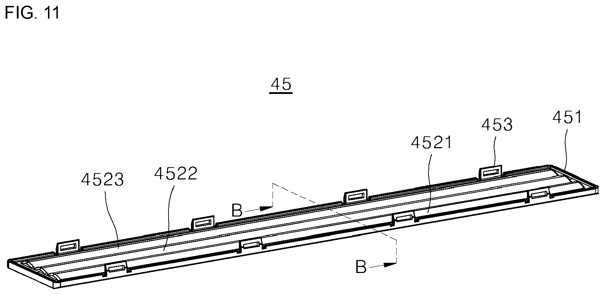

FIG. 11 is a front perspective view of the transparent cover illustrated in FIG. 5.

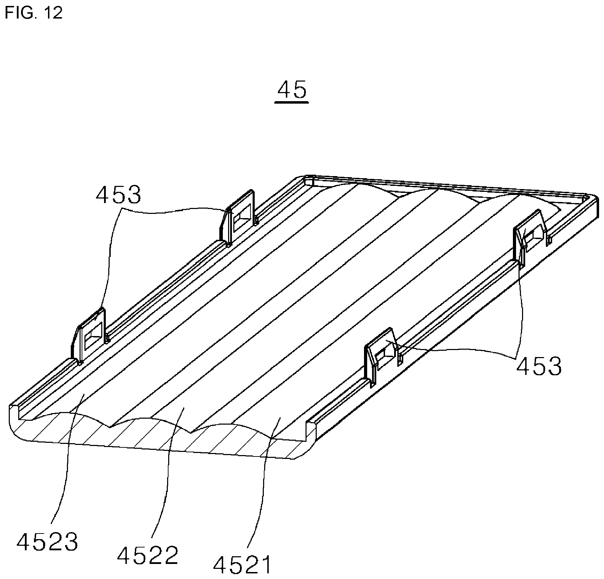

FIG. 12 is a cross-sectional perspective view of the transparent cover illustrated in FIG. 11 taken along line B-B.
FIGS. 13 and 14 are side perspective views of the handle part with the second handle body removed.

### [Best Mode]

The objects, features, and advantages described above will be described in detail later with reference to the attached drawings, so that those skilled in the art will be able to easily implement the technical idea of the present disclosure. In describing the present disclosure, if it is determined that a detailed description of known technologies related to the present disclosure may unnecessarily obscure the subject matter of the present disclosure, the detailed description will be omitted. Hereinafter, preferred embodiments according to the present disclosure will be described in detail with reference to the attached drawings. In the drawings, identical reference numerals are used to indicate identical or similar components.

Although first, second, or the like is used to describe various components, these components are, of course, not limited by these terms. These terms are only used to distinguish one component from another component, and unless specifically stated to the contrary, the first component may also be a second component.

Throughout the specification, unless otherwise stated, each component may be singular or plural.

Hereinafter, the disposition of any component on the "upper portion (or lower portion)" of a component or the "top (or bottom)" of a component may mean that any component is disposed in contact with the upper surface (or lower surface) of the component and other components is interposed between the component and any element disposed on (or under) the component.

Additionally, when a component is described as being "connected," "coupled," or "joined" to another component, it should be understood that the components may be directly connected or joined to each other, but the other component is "interposed" between components, or each component may be "connected," "combined," or "joined" through other components.

As used herein, singular expressions include plural expressions unless the context clearly dictates otherwise. In the present application, terms such as "consists of" or "comprises" should not be construed as necessarily including all of the various components or steps described in the specification, and should be construed as not including some of the components or steps, or as including additional components or steps.

In addition, as used herein, singular expressions include plural expressions unless the context clearly dictates otherwise. In the present application, terms such as "consists of" or "comprises" should not be construed as necessarily including all of the various components or steps described in the specification, and should be construed as not including some of the components or steps, or as including additional components or steps.

Throughout the specification, when referred to as "A and/or B", this means A, B or A and B, unless specifically stated to the contrary, and when referred to as "C to D", this means that it is C or higher and D or lower, unless specifically stated to the contrary.

### [Overall structure of the plant cultivator]

Hereinafter, the overall structure of the plant cultivator 1 according to the present disclosure will be described in detail with reference to the attached drawings.

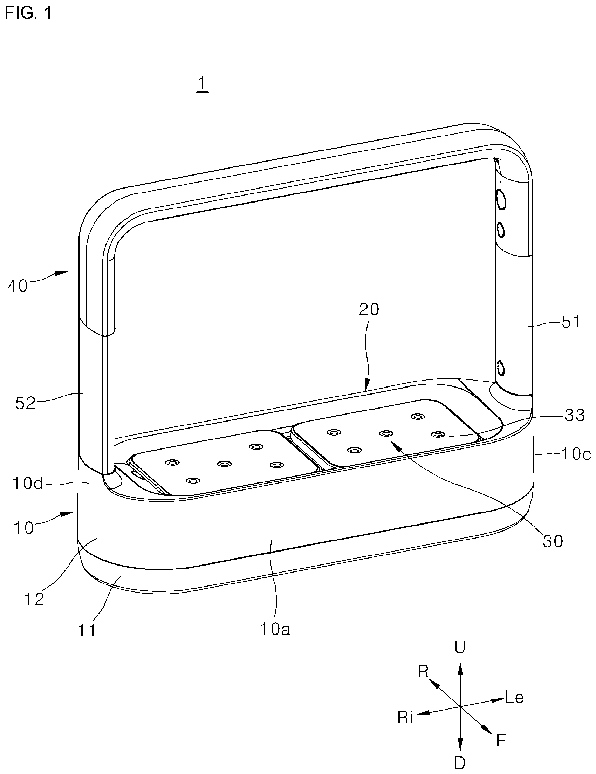

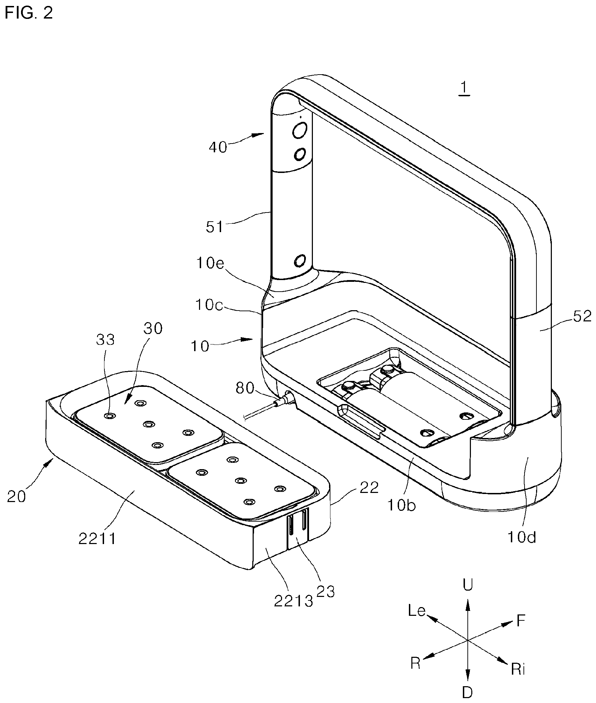

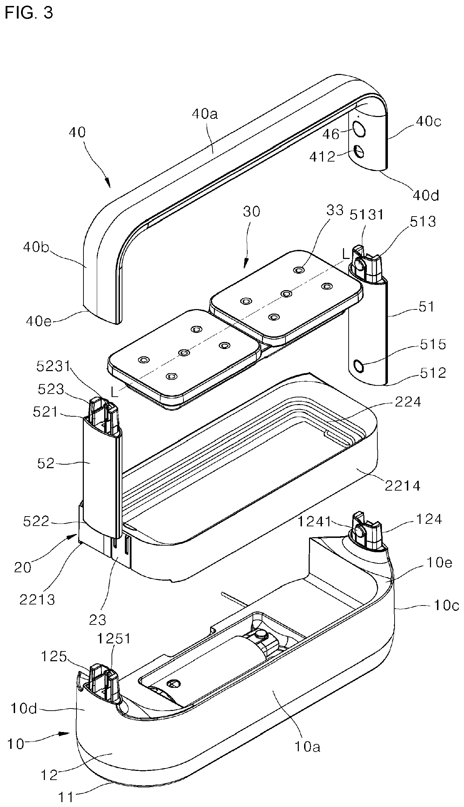

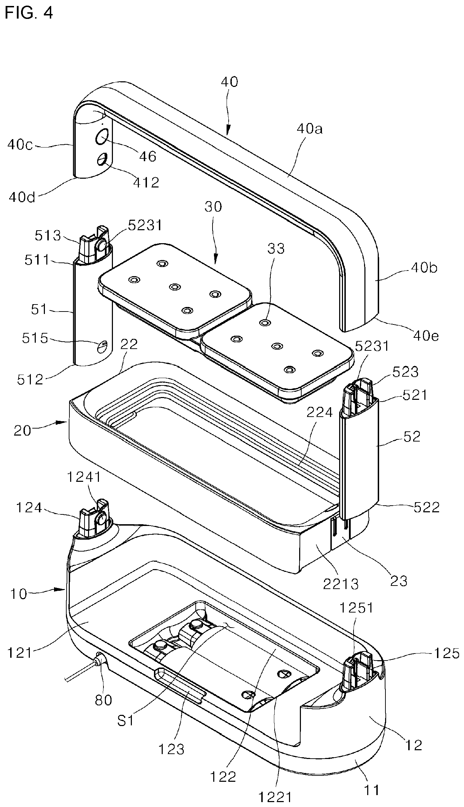

FIG. 1 is a front perspective view of a plant cultivator 1 according to a first embodiment of the present disclosure, FIG. 2 is a rear perspective view of the plant cultivator 1 illustrated in FIG. 1, FIG. 3 is an exploded perspective view of FIG. 1, and FIG. 4 is an exploded perspective view of FIG. 2.

As illustrated in FIGS. 1 to 4, the plant cultivator 1 according to the first embodiment of the present disclosure may include a cultivation port part 30 provided with at least one medium 33 for plant growth, a water tank part 20 on which the cultivation port part 30 is mounted and which stores cultivation water to be supplied to the medium 33, a main body part 10 to which the water tank part 20 is detachably coupled, and a handle part 40 disposed on the upper side of the main body part 10 and provided with a light source part 60.

As described above, the plant cultivator 1 according to the present disclosure is an open type, not a closed type.

Accordingly, at least the upper surface of the cultivation port part 30, where plants are cultivated and grown, is exposed to the indoor environment, that is, indoor air. More specifically, considering the characteristic of plants having a growth direction that generally grows in an upward direction (U-direction) opposite to the direction of gravity, the upper surface of the cultivation port part 30 is entirely open and exposed to the indoor environment.

In addition, the cultivation port part 30 in the present disclosure is modularized to be compatible with the above-described closed plant cultivator.

In other words, after germinating seeds in the plant cultivator 1 of the present disclosure, plants can be grown by moving and placing the cultivation port part 30 in a closed plant cultivator that can provide a better cultivation environment.

Conversely, the cultivation port part 30, which is being used in a closed plant cultivator, can be moved to the plant cultivator 1 to grow plants. As will be described later, since the height of the light source part 60 of the present disclosure can be adjusted, it can be preferably applied when it is desired to grow plants that are difficult to grow in a closed plant cultivator due to the growth height of the plants by moving them to the plant cultivator 1.

Meanwhile, the cultivation port part 30 may be assembled and seated in the water tank part 20, which will be described later, in a non-fastening manner.

Here, the meaning of being assembled in a non-fastening manner to the water tank part 20 means that the cultivation port part 30 can be assembled with the water tank part 20 without a separate fastening means, and means that it has a structure that the cultivation port part 30 cannot move by itself due to its own weight in a state of being assembled and seated, but can be easily separated and removed without separate disassembly operation.

In particular, as illustrated in FIG. 3, the cultivation port part 30 may have a symmetrical shape with respect to the dividing line L dividing the front and rear direction (F-R direction). Therefore, when it is removed from the water tank part 20 and then mounted again, it can be configured to be mounted even with the front and back sides reversed.

In this case, the cultivation port part 30 can be supported in the direction of gravity on the water tank part 20 and can be assembled by simply mounting it on the water tank part 20.

Therefore, when the user wants to move the cultivation port part 30 to a closed plant cultivator or separate the cultivation port part 30 from the water tank part 20 to replenish cultivation water, the cultivation port part 30 may be easily removed simply by lifting the cultivation port part 30 in the upward direction (U-direction) without a separate disassembly operation. Accordingly, user convenience may be improved.

To allow the user to easily hold the cultivation port part 30 to separate it, a cultivation port holding space S3 may be formed between the upper end of the cultivation port part 30 and the water tank part 20.

Meanwhile, the cultivation port part 30 may be provided with a plurality of media 33 to support the plants and protect the roots of the plants.

The medium 33 may be made of a porous material that facilitates the absorption of culture water and is advantageous for plant root growth. Since any configuration known in the art can be applied to the medium 33, description of the detailed configuration will be omitted.

Meanwhile, the drawing illustrates an embodiment in which a total of 10 media 33 are divided into two locations and provided in the cultivation port part 30. The number of media 33 may be changed and provided differently according to the size of the cultivation port part 30. The present disclosure is not limited to this, but will be described based on an embodiment in which a total of 10 media 33 are divided into two locations and provided in the cultivation port part 30, as illustrated.

The water tank part 20 disposed at the lower portion of the cultivation port part 30 mounts the cultivation port part 30 and serves to support the cultivation port part 30 and to store culture water to be supplied to the plants.

To this end, the water tank part 20 may include a water tank body 21 that stores cultivation water, and a water tank cover 22 that supports the cultivation port part 30 in a mounted manner.

A mounting surface 224 may be formed on the upper side of the water tank cover 22 to support the cultivation port part and to set the position of the cultivation port part 30. An insertion hole 225 may be formed inside the mounting surface 224 into which the lower end of the cultivation port part is inserted.

The water tank body 21 and the water tank cover 22 may be detachably coupled to each other through a separate fastening means, and for example, the detachment means may be a fastening lever 23 having one end portion which may be rotatably connected to either the water tank body 21 or the water tank cover 22 and the other end portion which may be engaged with either the water tank body 21 or the water tank cover 22.

The water tank part 20 may have an overall rectangular shape with a width in the left and right direction (Le-Ri direction) that is larger than the front and rear direction (F-R direction) and may have any height in a vertical direction (U-D direction) sufficient to accommodate the cultivation port part 30 as a whole.

The water tank part 20 may be made of a lightweight material while maintaining a predetermined strength. Preferably, the water tank body 21 and the water tank cover 22 of the water tank part 20 may be manufactured through plastic injection molding.

At this time, the water tank body 21 and the water tank cover 22 that constitute the water tank part 20 may be made of an opaque plastic material.

Furthermore, as described above, the upper end of the cultivation port part 30, to which light is directly emitted from the light source part 60, which will be described later, may be made of an opaque plastic material.

Therefore, most of the light emitted from the light source part 60 cannot reach the cultivation water stored inside the water tank part 20, and the possibility of moss growing inside the water tank part 20 and the amount of moss growth may be minimized.

Meanwhile, the rear surface 2211 of the outer wall surface 221 of the water tank cover 22 forming the outer surface of the water tank part 20 is directly exposed to the outside when coupled to the main body part 10, which will be described later, and forms a portion of the rear surface of the plant cultivator 1. At this time, in order to form a sense of unity, the rear surface 2211 of the water tank cover 22 forms a continuous surface with the outer surfaces 10c and 10d of the main body part 10.

The water tank part 20 is coupled to and seated on the main body part 10 in a non-fastening manner, similar to the cultivation port part 30 described above. Therefore, the water tank part 20 can be mounted on the main body part 10 without a separate fastening means.

Accordingly, the user can separate the water tank part 20 from the main body part 10 or seat it on the main body part 10 without a separate uncoupling or coupling operation.

When attempting to separate the water tank part 20 while the water tank part 20 is seated on the main body part 10, the water tank part 20 can be easily separated through manipulation that the user simply lifts it in the direction of the arrow in FIG. 2 while holding the water tank part 20.

As the lower portion of the water tank part 20, a holding groove part 123 may be formed on the rear surface 10b of the main body part 10 to enable the user to effectively hold.

The width and height of the holding groove part 123 may be formed to have a size that allows the user's fingers to easily enter.

As will be described later, in response to this, a water tank holding space S2 may be formed in the lower portion of the water tank part 20, having a depth sufficient for the user's fingers to enter so that the user can effectively grasp the water tank part.

Meanwhile, the water tank part 20 may be provided with positioning means to set a correct position to be seated and prevent the water tank part 20 from removing from the correct position.

Such a positioning means may be provided on the water tank body 21, and for example, the positioning means may be a guide rib integrally formed on the lower surface of the water tank body 21.

The guide rib may have an outer shape corresponding to the shape of the upper entrance 1221 of the engaging groove part 122 so that it can be inserted into the engaging groove part 122 formed in the main body part 10, which will be described later.

The seating position of the water tank part 20 may be accurately guided by the guide rib and the engaging groove part 122. When insertion of the guide rib is completed, the engaging groove part 122 may act as a stopper for the guide rib, and thus may restrict the relative movement in the front and rear direction (F-R direction) and the relative movement in the left and right direction (Le-Ri direction) with respect to the main body part 10.

By restricting the relative movement of the water tank part 20 in this way, the water tank part 20 can be effectively prevented from removing from its correct position.

Meanwhile, the main body part 10 disposed below the water tank part 20 serves to accommodate the water tank part 20 and support the handle part 40, which will be described later.

In order to accommodate the water tank part 20, the upper surface 10e and the rear surface 10b of the main body part 10 are mostly open corresponding to the shape of the water tank part 20. The front surface 10a of the main body part 10 is closed to form the front surface of the plant cultivator 1.

The front surface 10a of the main body part 10 may be formed in the form of a flat surface. The forward movement of the water tank part 20 may be blocked by the front surface 10a of the main body part 10.

The left side 10c and the right side 10d of the main body part 10 may be provided in an arcuate shape with a predetermined curvature.

For example, the main body part 10 may be provided in a divided form in the vertical direction (U-D direction). These vertically divided bodies may include a first main body 11 corresponding to the lower divided body and a second main body 12 corresponding to the upper divided body.

The first main body 11 and the second main body 12 may each be manufactured through plastic injection molding. For example, similar to the water tank part 20, they may each be made from an opaque plastic material and then combined.

The present disclosure is not limited to this, but will be described below based on an embodiment in which the main body part 10 is formed by combining the first main body 11 and the second main body 12.

The water tank part 20 is coupled to and accommodated in the second main body 12.

As described above, an engaging groove part 122 engaging with the guide rib of the water tank part 20 may be formed on the bottom surface 121 where the water tank part 20 is coupled to the second main body 12.

As illustrated in FIG. 4, the engaging groove part 122 may be a concave groove part convex downward from the bottom surface 121 of the second main body 12 toward the first main body 11.

The shape of the upper inlet 1221 of the engaging groove part 122 may be configured to have a shape corresponding to the outer shape of the guide rib of the water tank part 20. The upper inlet 1221 of the engaging groove part 122 serves as a stopper that prevents relative movement of the guide rib of the water tank part 20 when the water tank part 20 is seated.

In addition to the stopper function of the guide rib, the engaging groove part 122 may perform the function of providing a space for storing spacers 51 and 52, which will be described later.

When the first spacer 51 and the second spacer 52 are separated from the main body part 10 and the handle part 40, respectively, both the separated first spacer 51 and the second spacer 52 may be accommodated inside the engaging groove part 122.

Accordingly, the inner space of the engaging groove part 122 becomes a storage space S1 in which the first spacer 51 and the second spacer 52 can be accommodated at the same time.

Inside the storage space S1, a shape part corresponding to the outer shape of the first spacer 51 and the second spacer 52 is provided so that the first spacer 51 and the second spacer 52 may be maintained in the stored state.

Meanwhile, as described above, the main body part 10 also serves to support the handle part 40.

In order to support the handle part 40 disposed on the upper side of the main body part 10a, first main body insert 124 may be provided on the upper left side of the second main body 12, and a second main body insert 125 may be provided on the upper right side of the second main body 12.

The first main body insert 124 may be coupled to an inside of the first end portion 40d of the handle part 40 in a manner that is coupled to a first handle fitting part 43 provided inside the first end portion 40d of the handle part 40, which will be described later.

Likewise, the second main body insert 125 may be coupled to an inside of the second end portion 40e of the handle part 40 in a manner that is coupled to a second handle fitting part 44 provided inside the second end portion 40e of the handle part 40.

The first main body insert 124 and the second main body insert 125 have cross sections of the upper end portions 511 and 521 that are smaller than the cross sections of the lower end portions 512 and 522 to facilitate entry into the first end portion 40d and the second end portion 40e.

Meanwhile, unlike the water tank part 20 and the cultivation port part 30, the handle part 40 may be coupled by a fastening method.

The first main body insert 124 and the second main body insert 125 may provide a force coupling means. By way of example, the forced coupling means of the fastening method may be elastic coupling parts 1241, 1251.

These elastic coupling parts 1241, 1251 may be provided in the first main body insert 124 and the second body insert 125, respectively, and the first main body insert 124 and the second body insert 125 are elastically deformed as they enter the first end portion 40d and the second end portion 40e of the handle part 40.

Afterwards, when the coupling of the first main body insert 124 and the second main body insert 125 is completed, while the elastic coupling parts 1241 and 1251 elastically return to their original shape thereof, the elastic coupling parts 1241 and 1251 acts to form an engagement with the first end portion 40d and the second end portion 40e of the handle part 40.

At the first end portion 40d and the second end portion 40e of the handle part 40, there is a coupling hole 412 having a shape corresponding to the outer shape of the elastic coupling parts 1241 and 1251 so that such an engagement coupling can be formed.

In order to separate the handle part 40 and the main body part 10 after completion of fastening, the separation can be done by pressing the elastic coupling parts 1241 and 1251 to elastically deform so that the elastic coupling parts 1241 and 1251 engaged with the coupling hole 412 are removed from the coupling hole 412.

However, the present disclosure is not limited to the forced coupling method using the elastic coupling parts 1241 and 1251 and the coupling hole 412, and in addition to this, any forced coupling means known in the art may be applied. Detailed description will be omitted below.

Meanwhile, as will be described later, power supply to the light source part 60 provided in the handle part 40 is provided only through the first handle fitting part 43, and for this purpose, the first main body insert 124 and the first handle joint part 43 may be provided with a connector for power supply.

Therefore, if the first main body insert 124 is incorrectly assembled or misconnected, such as when the first main body insert 124 is coupled to the second handle fitting part 44, power cannot be supplied to the light source part 60.

To prevent this, the first handle fitting part 43 and the second handle fitting part 44 may be provided with means for preventing misassembly or misconnection.

Meanwhile, the first main body 11 constituting the lower divided body of the main body part 10 may be provided with a power input terminal through which external power 80 is input. Although not illustrated, the power input terminal may be provided on the first main body 11 in the form of an outlet.

Additionally, the first main body 11 is in direct contact with a fixed surface such as the ground and a table and is supported on the fixed surface.

Therefore, although not illustrated, anti-slip pads for shock absorption and slip prevention may be provided at a plurality of locations on the lower side of the lower surface of the first main body 11. For shock absorption and anti-slip functions, the anti-slip pad may be made of a rubber material with certain elasticity.

Meanwhile, the above-described spacers 51 and 52 may be connected between the handle part 40 and the main body part 10.

The spacers 51 and 52 are used to adjust the height of the handle part 40.

In particular, the handle part 40 is provided with a light source element 62 constituting the light source part 60, as will be described later. Therefore, the plant cultivator 1 according to the present disclosure has the feature of being able to adjust the height of the light source element 62 using the spacers 51 and 52.

Through this, it is possible to adjust the height of the light source part 60 according to the growth height of the plant using the spacers 51 and 52.

The lower end portion 512 of the first spacer 51 connected to the first main body insert 124 of the second main body 12 has a first spacer fitting part 514 having the same configuration as that of the above-described first handle fitting part 43 may be provided. In addition, the upper end portion 511 of the first spacer 51 may be provided with a first spacer insert 513 having the same configuration as the main body insert 124 so that it can be coupled to the first handle fitting part 43 formed at the first end portion 40d of the handle part 40. Therefore, the first spacer insert 513 may be provided with an elastic coupling part 5131 like the first main body insert 124 to implement a forced coupling function.

Likewise, the lower end portion 522 of the second spacer 52 connected to the second main body insert 125 of the second main body 12 may be provided a second spacer fitting part 524 having the same configuration as that of the second handle fitting part 44. In addition, the upper end portion 521 of the second spacer 52 is provided with a second spacer insert 523 having the same configuration as the main body insert 125 of the main body part 10 so that it can be coupled to the second handle fitting part 44 formed at the second end portion 40e of the handle part 40. Therefore, the second spacer insert 523 may be provided with an elastic coupling part 5231 like the second main body insert 125 to implement a forced coupling function.

At this time, the means for preventing misassembly or misconnection provided on the first handle fitting part 43 and the second handle fitting part 44 of the handle part 40 may be equally provided at the lower end portion 512 of the first spacer 51 and at the lower end portion 522 of the second spacer 52.

Meanwhile, the handle part 40 disposed on the upper side of the main body part 10 provides a handle function that the user can hold when moving the plant cultivator 1.

### [Detailed configuration of the handle part and light source part]

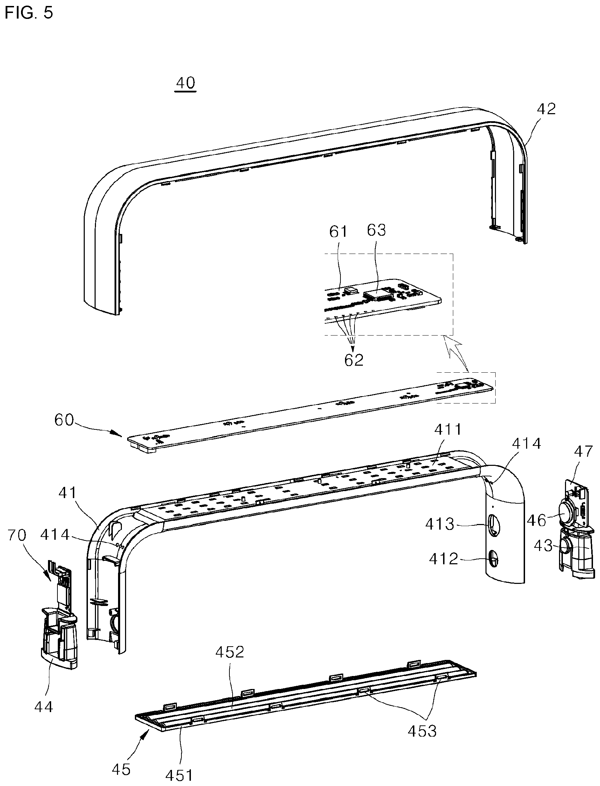

Hereinafter, the detailed configuration of the handle part 40 and the light source part 60 disposed on the handle part 40 will be described with reference to FIG. 5 and below.

The handle part 40 may additionally perform the function of receiving and supporting the light source part 60 that emits light toward the cultivation port part 30. Accordingly, the handle part 40 may be referred to as a housing or holder of the light source part 60, considering its relationship to the light source part 60. Hereinafter, for convenience, the member that serves to accommodate and support the light source part 60 will be referred to as the handle part 40 and will be described.

Specifically, the handle part 40 may be provided with a horizontal extension part 40a extending across the upper side of the main body part 10 along the left and right direction (Le-Ri direction), a first downward extension part 40b integrally connected to the left end portion of the horizontal extension part 40a, and a second downward extension part 40c integrally connected to the left end portion of the horizontal extension part 40a.

As illustrated, the upper side of the first downward extension part 40b connected to the left end portion of the horizontal extension part 40a may be extended in the form of a curved portion having a predetermined curvature, and the upper side of the second downward extension part 40c connected to the right end portion of the horizontal extension part 40a may be extended in the form of a curved portion having a predetermined curvature.

The horizontal extension part 40a may extend in the left and right direction (Le-Ri direction) parallel to the upper surface of the port cover 31 of the cultivation port part 30 so as to effectively emit light toward the cultivation port part 30. In other words, the horizontal extension part 40a may extend across the cultivation port part 30 in the left and right direction (Le-Ri direction).

Inside the horizontal extension part 40a, the light source part 60 may be disposed to entirely cover the upper surface of the port cover 31 of the cultivation port part 30 in the left and right direction (Le-Ri direction).

In this way, the light source part 60 is disposed on the horizontal extension part 40a so that the emission distance of the light generated from the light source part 60 toward the upper surface of the cultivation port part 30 is maintained constant.

As illustrated in FIG. 5, the light source part 60 may include a circuit board 61 extending long in the left and right direction (Le-Ri direction), a plurality of light source elements 62 disposed on the lower surface of the circuit board 61, and a controller 63 determining the power supply to a light source element 62.

Each light source elements 62 may be a light emitting diode chip or a package including a light emitting diode chip that can generate visible light by converting electrical energy into visible light. Hereinafter, the description will be based on an embodiment in which the each light source elements 62 is light emitting diode chips.

At this time, the visible light generated by the each light source elements 62 may be white light or red light having a wavelength range suitable for plant growth.

Only light emitting diode chips that generate white light may be disposed on the circuit board 61, or a combination of light emitting diode chips that generate white light and red light may be disposed on the circuit board 61.

The illustrated embodiment exemplarily illustrates an embodiment in which a plurality of light source elements 62 are disposed in three rows in the longitudinal direction of the circuit board 61. The present disclosure is not limited to this, but will be described based on an embodiment in which a plurality of light source elements 62 are arranged in three rows as illustrated.

At this time, when arranged in three rows, the light source elements 62 constituting each row may be arranged linearly along a virtual extension line extending parallel to the front and rear direction (F-R direction).

For convenience, the plurality of light source elements disposed at the frontmost position and constituting the first row along the first extension line L1 are referred to as first light source elements 621, the plurality of light source elements disposed at the rear of the first row and constituting the second row along the second extension line L2 are referred to as second light source elements 622, and the plurality of light source elements disposed at the rear of the second row and constituting the third row along the third extension line L3 are referred to as the third light source 623.

At this time, the first extension line L1, the second extension line L2, and the third extension line L3 are parallel to each other.

In this way, the plurality of light source elements 62 arranged in parallel in three rows may be arranged in a grid form to improve light emitting efficiency. By arranging the plurality of light source elements 62 in a grid form, the light generated and emitted from the each light source elements 62 can overlap each other and be transmitted to the cultivation port part 30.

In addition, so that light can be effectively emitted toward the cultivation port part 30, the plurality of light source elements 62 are disposed in the vertical direction (U-D direction) in the area occupied by the upper surface of the port cover 31 of the cultivation port part 30.

In other words, when the plurality of light source elements 62 are moved in parallel in the downward direction (D-direction) together with the circuit board 61, the plurality of light source elements 62 may all be arranged within the area of the upper surface of the port cover 31.

However, the spacing between the plurality of light source elements 62 may be maintained constant or may vary according to the position of the each light source elements 62.

In the illustrated embodiment, an embodiment in which the spacing between the light source elements 62 arranged in the center of the circuit board 61 in the left and right direction (Le-Ri direction) is varied larger than the spacing between the light source elements 62 arranged adjacent to both end portions of the circuit board 61 in the left and right direction (Le-Ri direction) is illustrated.

In other words, the amount of overlap of light generated by the light source elements 62 arranged in the center is bound to be greater than the amount of overlap of light generated by the light source elements 62 arranged adjacent to both end portions of the circuit board 61.

Accordingly, by varying the spacing between the light source elements 62 to gradually become smaller as they move away from the center, the amount of light reaching the upper surface of the port cover 31 can be maintained relatively evenly without being concentrated in the central portion.

The arrangement or disposition shape of the light source elements 62 can be equally applied to the arrangement or disposition shape of the light transmission holes 411 formed in the first handle body 41, as will be described later.

Similar to the main body part 10, the handle part 40 may be provided in a form divided in the vertical direction (U-D direction). These vertically divided bodies may include a first handle body 41 corresponding to the lower divided body and a second handle body 42 corresponding to the upper divided body.

The first handle body 41 and the second handle body 42 may each be manufactured through plastic injection molding, and for example, for the emitting efficiency of the light source element 62, each may be manufactured from an opaque plastic material and then coupled.

Between the first handle body 41 and the second handle body 42, an accommodation space that can communicate between the first end portion 40d and the second end portion 40e may be formed, and a light source part 60 and, as will be described later, a switch part 46, a wireless communication part 70, and the like may be accommodated.

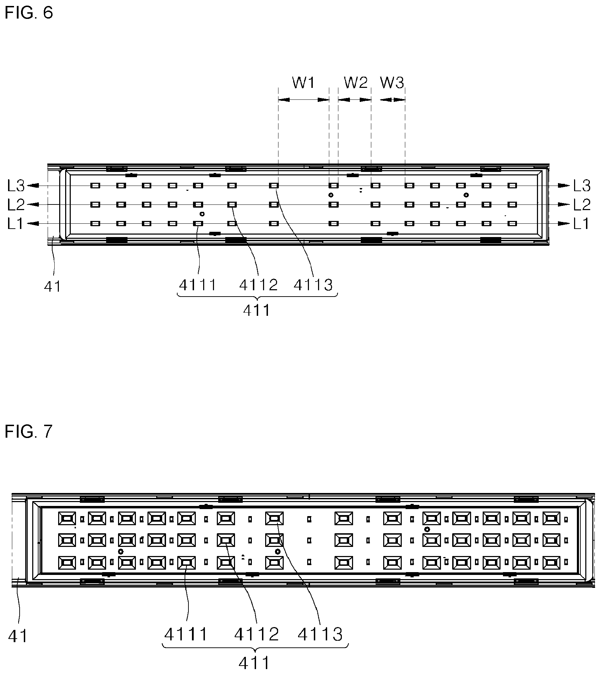

Meanwhile, as illustrated in FIGS. 6 to 9, a plurality of light-light transmission holes 411 open toward the cultivation port part 30 may be formed in the first handle body 41.

A plurality of light transmission holes 411 may be provided in one-to-one correspondence with the plurality of light source elements 62 described above on the board support surface 41a on which the circuit board 61 is mounted. An integral part of a plurality of positioning boss 41b for setting the correct position of the circuit board 61 and a plurality of board fastening hooks 41c for fixing the circuit board 61 may be provided on the board support surface 41a.

Corresponding to the light source element 62, a plurality of light transmission holes 411 may be arranged in a grid shape on the board support surface 41a.

In addition, the first light transmission holes 4111 corresponding to the first light source element 621 may be arranged linearly while forming a first row along the first extension line L1, the second light transmission holes 4112 corresponding to the second light source element 622 may be arranged linearly while forming a second row along the second extension line L2, and the third light transmission holes 4113 corresponding to the third light source elements 623 may be arranged linearly while forming a third row along the third extension line L3.

At this time, the second extension line L2 forming the second row corresponding to the middle row may be disposed on the same vertical plane as the dividing line L of the cultivation port part 30 described above. In other words, when the second extension line L2 is moved in parallel in the downward direction (D-direction), the second extension line forms the same straight line as the dividing line L.

In addition, like the plurality of light source elements 62, the spacing between the light transmission holes 411 on the board support surface 41a may vary according to the position of the each light source elements 62.

In other words, as illustrated in FIG. 6, the spacing W1 between the light transmission holes 411 arranged in the center of the first handle body 41 in the left and right direction may be formed larger than the spacing W2, W3 between the light source elements 62 arranged adjacently in the left and right direction.

Furthermore, these spacing (W1, W2, W3) may be modified to gradually become smaller as they progress from the center of the first handle body 41 to the left and right end portions.

In this way, by varying the spacing between the light transmission holes 411 in the left and right direction, the amount of light reaching the upper surface of the port cover 31 may be maintained relatively evenly without being concentrated in the central portion.

Meanwhile, a light condensing structure may be formed in each light transmission hole 411 so that the light generated by the corresponding light source element 62 may be efficiently emitted to the cultivation port part 30.

The first of the light condensing structures can be implemented through the shape of each light transmission holes 411.

As illustrated in FIGS. 7 to 9, in consideration of the shape of the light source element 62, which is provided in the form of a light emitting diode chip on the circuit board 61 in an approximately hexahedral shape, for example, the each light transmission holes 411 may be formed as a square hole whose cross-sectional shape is rectangular.

Additionally, when the plurality of light source elements 62 are all provided as light emitting diode chips with the same outer shape and standard, the shape and size of the each light transmission holes 411 may all be formed to be the same.

The present disclosure is not limited to this, but will be described below based on an embodiment in which the each light transmission holes 411 have the same shape and size as illustrated.

When the each light transmission holes 411 is provided as a square hole with a rectangular cross-sectional shape, both the upper and lower openings of the each light transmission holes 411 may be rectangular in shape.

At this time, the each light source elements 62 is disposed to be at least partially inserted through the upper opening 411a of the corresponding each light transmission holes 411. The size of the upper opening 411a may be larger than the external size of the each light source elements 62 so that the each light source elements 62 may be inserted.

In this way, the each light source elements 62 are formed to be inserted at least partially, preferably entirely, into the each light transmission holes 411, so that the light generated from the each light source elements 62 can be guided entirely through the each light transmission holes 411 in a lower direction (D-direction). Additionally, the amount of light leaking to the upper side of the each light transmission holes 411 can be minimized. In other words, the light emitting efficiency of the light source element 62 can be improved.

Meanwhile, the area of the lower opening 411b of the each light transmission holes 411 may be larger than the area of the upper opening 411a.

More specifically, the cross-sectional area of the each light transmission holes 411 may gradually increase as it moves in the downward direction (D-direction) from the upper opening 411a of the each light transmission holes 411 toward the lower opening 411b.

Accordingly, the internal shape of the each light transmission holes 411 may have a square funnel shape whose cross-sectional area gradually expands as it moves in the downward direction (D-direction). More specifically, the center of the upper opening 411a and the center of the lower opening 411b may have a square pyramid shape arranged in the vertical direction (U-D direction).

At this time, so that the funnel shape can be realized, the inner circumferential surface of the each light transmission holes 411 extending from the upper opening 411a to the lower opening 411b serves as a reflective plate of the light generated by the each light source elements 62.

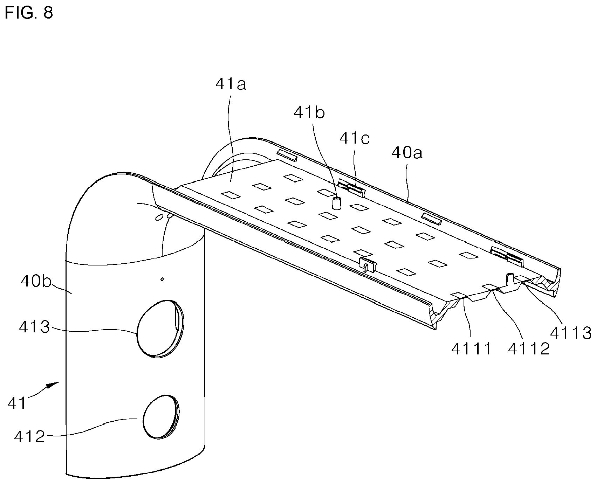

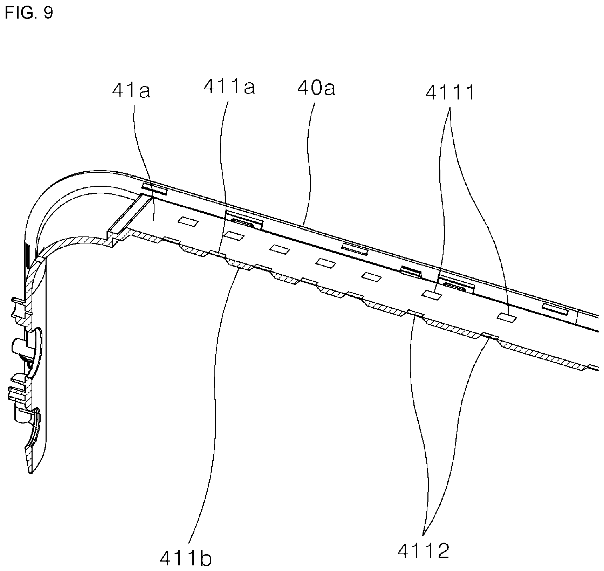

As illustrated in FIGS. 8 and 9, the inner circumferential surface 411c of the each light transmission holes 411, which is provided in the form of a square pyramid, may be composed of a total of four inclined surfaces, and these four inclined surfaces may be reflective plates that reflect the light generated the each light source elements 62 toward the upper surface of the port cover 31.

Accordingly, the path of light generated from the each light source elements 62 can be switched to generally point toward the upper end of the port cover 31, and through this, the light generated from the each light source elements 62 may be condensed toward the port cover 31.

FIGS. 7 to 9 illustrates an embodiment in which the inner circumferential surface 411c of the each light transmission holes 411 is provided as a flat surface extending in a straight line from the upper opening 411a to the lower opening 411b, but, alternatively, in order to increase light condensing efficiency, the inclined surface may be formed as a curved surface with a predetermined curvature.

The second light-concentrating structure can be implemented through the shape of the transparent cover 45.

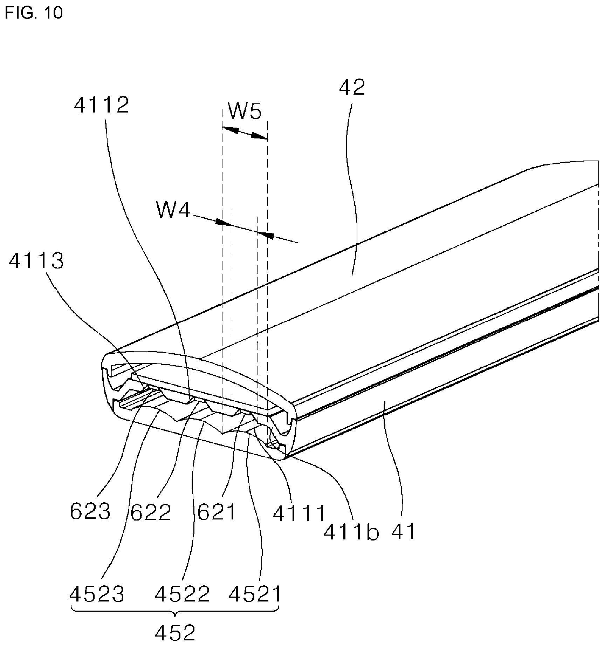

As illustrated in FIG. 10, the handle part 40 may be disposed a lower portion of the first handle body 41 and may further include a transparent cover 45 that covers the plurality of light transmission holes 411 from the lower portion.

As illustrated, the transparent cover 45 is provided with a transparent plate 451 made of a transparent material so that the light generated by the light source element 62 may be effectively transmitted.

Between the transparent plate 451 and the plurality of light transmission holes 411, condensing lens parts 452 arranged in three rows corresponding to the arrangement direction of the light source elements 62 may be provided.

The condensing lens part 452 may consist of three condensing lenses having a cross-sectional shape such as a convex lens that is formed to be convex in the upward direction (U-direction) toward the light transmission hole 411 in order to increase the light condensing efficiency of the light passing through the light transmission hole 411.

Accordingly, the path of light introduced into the condensing lens part 452 may be refracted toward the upper surface of the port cover 31.

At this time, the three condensing lenses may include a first condensing lens 4521 extending in a direction parallel to the first extension line L1 corresponding to the first light transmission hole 4111, a second condensing lens 4522 extending in a direction parallel to the second extension line L2 corresponding to the second light transmission hole 4112, and a third condensing lens 4523 extending in a direction parallel to the third extension line L3 corresponding to the third light transmission hole 4113.

As illustrated, the first to third condensing lenses 4521, 4522, and 4523 may be formed to have the same size and shape, and the first to third light transmission holes 4111, 4112, and 4113 may be linearly extended in the left and right direction (Le-Ri direction) corresponding to the arrangement direction.

In addition, the width W5 of the first to third condensing lenses 4521, 4522, and 4523 in the front and rear direction may be formed larger than the width W4 of the lower opening of the first to third light transmission holes 4111, 4112, and 4113 in the front and rear direction.

Therefore, the light generated by the first light source element 621 and passing through the lower opening of the first light transmission hole 4111 can be efficiently introduced into the first condensing lens 4521, the light generated by the second light source element 622 and passing through the lower opening of the second light transmission hole 4112 can be efficiently introduced into the second condensing lens 4522, and the light generated by the third light source element 623 and passing through the lower opening of the third light transmission hole 4113 can be efficiently introduced into the third condensing lens 4523.

Therefore, the amount of diffusion of light passing through each of the condensing lenses 4521, 4522, and 4523 may be minimized, and the light may be converged and condensed toward the upper surface of the port cover 31, so that the light emitting efficiency of the first to third light source elements 621, 622, 623) can be improved.

Meanwhile, a plurality of fastening tabs 453 for hook-type fixation to the first handle body 41 may be integrally provided at the front and rear edges of the transparent plate 451.

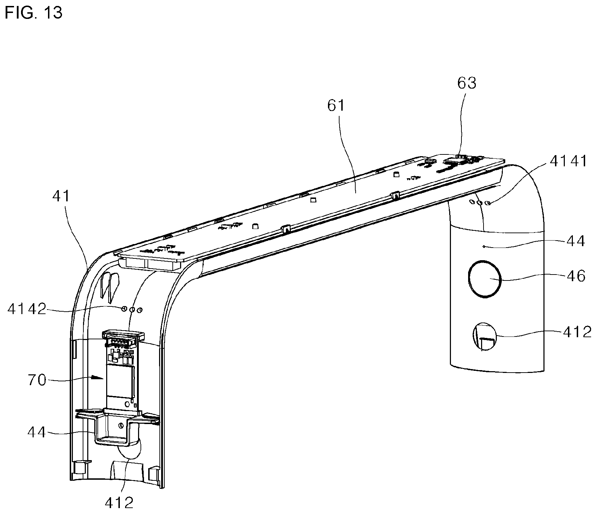

Meanwhile, as illustrated in FIG. 13, the controller 63 disposed adjacent to the left end portion of the circuit board 61 plays a role in determining whether to supply power to the light source element 62, the power supply time, or the like.

The controller 63 may be provided in various forms, such as a microcontroller, microcomputer, or microprocessor, as is known in the art.

Meanwhile, the first downward extension part 40b of the handle part 40 may be provided with a first handle fitting part 43, and a switch part 46 may be provided on the upper side of the first handle fitting part 43.

Additionally, the second downward extension part 40c of the handle part 40 may be provided with a second handle fitting part 44, and a wireless communication part 70 may be provided on the upper side of the second handle fitting part 44.

The switch part 46 is electrically connected to the above-described controller 63 and may be provided in the form of a push button as illustrated.

The switch part 46 is exposed to the outside through a switch hole 413 formed in the first handle body 41, which will be described later.

Accordingly, when the user operates the push button, the controller 63 can perform control to supply power to the light source element 62 or block the power supply according to the signal received from the push button. Additionally, the controller 63 can perform control to start or stop the operation of the wireless communication part 70 according to a signal received through a push button.

The wireless communication part 70 may, for example, be a WIFI module capable of two-way connection to the Internet network. The WIFI module can be electrically connected to the controller 63, and the controller 63 can be connected to the user's mobile terminal device through the WIFI module.

Furthermore, the controller 63 can exchange information with the above-mentioned closed plant cultivator and other plant cultivators through the WIFI module. Information about plants growing in each closed plant cultivator and other plant cultivators can be exchanged with each other. Here, information about the plant may include the species name of the plant, the number of days the plant grows, the time the light remains on, and the like.

Meanwhile, a status indicator light 47 may be disposed on the upper side of the switch part 46 to indicate whether the wireless communication part 70 is operating, through which the user can intuitively check whether the wireless communication part 70 is connected to the Internet network.

Meanwhile, an air flow path for cooling the light source part 60 may be formed through an accommodation space that can communicate between the first end portion 40d and the second end portion 40e of the handle part 40.

For example, a plurality of ventilation holes 414 may be formed in the first handle body 41 to allow indoor air to flow in and out of the air flow path.

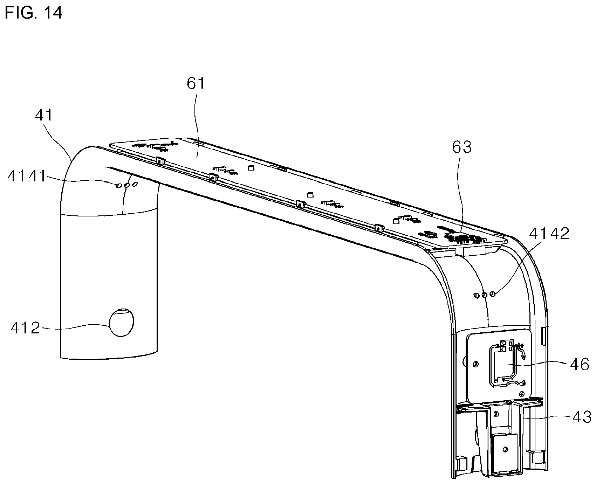

As illustrated in FIGS. 13 and 14, some of the plurality of ventilation holes 414 illustrated may be formed in the first downward extension part 40b as the first ventilation hole 4141, and the remaining parts may be formed in the second downward extension part 40c as the second ventilation holes 4142.

Specifically, the first ventilation hole 4141 may be formed at a location between the switch part 46 and the light source part 60, and the second ventilation hole 4142 may be formed at a location between the wireless communication part 70 and the light source part 60.

Therefore, the light source element 62 may be effectively cooled by the air flow path formed between the first ventilation hole 4141 and the second ventilation hole 4142, and thus the efficiency of the light source element 62 may be improved and the durability of the light source element 62 may be improved.

Furthermore, through the positional characteristics of the first ventilation hole 4141 and the second ventilation hole 4142, the amount of heat generated in the light source element 62 transmitted to the switch part 46 and the wireless communication part 70 may be minimized and damage to the switch part 46 and the wireless communication part 70 due to overheating may be effectively prevented.

At this time, the first ventilation hole 4141 and the second ventilation hole 4142 may be formed in symmetrical positions with respect to the light source part 60.

As described above, it is obvious that the present disclosure has been described with reference to the illustrative drawings, but the present disclosure is not limited to the embodiments and drawings disclosed herein, and various modifications may be made by those skilled in the art within the scope of the technical idea of the present disclosure. In addition, although the operational effects according to the configuration of the present disclosure were not explicitly described and explained while explaining the embodiments of the present disclosure above, it is natural that the predictable effects due to the configuration should also be recognized.

## Claims

1. A plant cultivator comprising:
a cultivation port part;
a main body part on which the cultivation port part is detachably disposed;
a light source part configured to emit light toward the cultivation port part; and
a housing disposed above the main body part and configured to accommodate the light source part;
wherein the housing is disposed to be spaced apart from an upper surface of the cultivation port part and includes a horizontal extension part extending across the upper surface of the cultivation port part, and
wherein the light source part is disposed inside the horizontal extension part.

2. The plant cultivator of claim 1,
wherein the light source part includes:
a circuit board disposed parallel to the upper surface of the cultivation port part and having a length in a left and right direction larger than a width in a front and rear direction; and
a plurality of light source elements configured to generate light emitted toward the cultivation port part and disposed on the circuit board.

3. The plant cultivator of claim 2,
wherein, when the circuit board is moved in parallel in a downward direction toward the cultivation port part, the plurality of light source elements are located inside the upper surface of the cultivation port part.

4. The plant cultivator of claim 2,
wherein the plurality of light source elements include:
a plurality of first light source elements arranged on a first extension line extending along a longitudinal direction of the circuit board; and
a plurality of second light source elements arranged on a second extension line extending along the longitudinal direction of the circuit board and different from the first extension line.

5. The plant cultivator of claim 4,
wherein the first extension line and the second extension line are parallel to each other.

6. The plant cultivator of claim 4,
wherein the spacing between the plurality of first light source elements in the left and right direction is constant respectively, and the spacing between the plurality of second light source elements in the left and right direction is constant respectively.

7. The plant cultivator of claim 4,
wherein the spacing between the plurality of first light source elements in the left and right direction is varied while advancing along the first extension line, and the spacing between the plurality of second light source elements in the left and right direction is varied while advancing along the second extension line, respectively.

8. The plant cultivator of claim 7,
wherein the spacing between the plurality of first light source elements in the left and right direction gradually becomes smaller as they move away from the center of the horizontal extension part, and the spacing between the plurality of second light source elements in the left and right direction gradually becomes smaller as they move away from the center of the horizontal extension part.

9. The plant cultivator of claim 2,
wherein the horizontal extension part includes a plurality of light transmission holes that allow light generated from the plurality of light source elements to pass through and are open toward an upper surface of the cultivation port part.

10. The plant cultivator of claim 9,
wherein each light source elements constituting the plurality of light source elements is disposed in one-to-one correspondence with each light transmission holes constituting the plurality of light transmission holes, respectively.

11. The plant cultivator of claim 10,
wherein the each light source elements is partially inserted into the each light transmission holes, respectively,
wherein the each light transmission holes has an upper opening that opens in an upward direction and into which the each light source elements is partially inserted, and a lower opening that opens in a downward direction, and
wherein the area of the lower opening is formed to be larger than the area of the upper opening.

12. The plant cultivator of claim 11,
wherein the housing further includes a transparent cover coupled to the horizontal extension part, disposed on a lower side of the lower opening, and through which light generated by the plurality of light source elements passes; and
wherein the transparent cover includes a condensing lens part that is formed to be convex toward the lower opening.

13. The plant cultivator of claim 12,
wherein the condensing lens part extends linearly in the left and right direction, and a width in the front and rear direction is maintained constant while moving in the left and right direction, and
wherein the width of the condensing lens in the front and rear direction is larger than a width of each light transmission holes in the front and rear direction.

14. The plant cultivator of claim 1,
wherein the housing includes:
a first downward extension part having an upper end portion which is connected to a left end portion of the horizontal extension part and a lower end portion which is detachably connected to the main body part; and
a second downward extension part having an upper end portion which is connected to a right end portion of the horizontal extension part and a lower end portion which is detachably connected to the main body part;
wherein the first downward extension part is provided with a first ventilation hole that communicates an inside of the horizontal extension part with indoor air, and
wherein the second downward extension part is provided with a second ventilation hole that communicates the inside of the horizontal extension part with the indoor air.

15. The plant cultivator of claim 14,
wherein the first ventilation hole and the second ventilation hole are disposed to be spaced apart from each other with the light source part interposed therebetween.
